# EUROPEAN PATENT SPECIFICATION

(11) **EP 2 538 490 B1**
(45) Date of publication and mention of the grant of the patent: **04.01.2017**
(21) Application number: 12003955.7
(22) Date of filing: 21.05.2012
(51) Int. Cl.: H01Q 7/00, H01Q 1/24, H01Q 1/38

(54) **Loop antenna for mobile terminal**
Schleifenantenne für mobiles Endgerät
Antenne boucle pour terminal mobile

(30) Priority: 23.06.2011 KR 20110061340
(43) Date of publication of application: 26.12.2012
(73) Proprietor: LG Electronics Inc., Seoul 150-721 (KR)
(72) Inventor: Rhyu, Hanphil, Seoul (KR); Hong, Sungjoon, Gyeonggi-Do (KR); Rho, Sungjung, Seoul (KR); Lee, Jaegon, Gyeonggi-Do (KR)
(74) Representative: Frenkel, Matthias Alexander

(56) References cited:
- EP-A1- 1 555 715
- EP-A2- 2 040 329
- EP-A2- 2 296 227
- US-A1- 2010 085 268

## Description

### BACKGROUND OF THE INVENTION

### 1. Field of the Invention

The present invention relates to a mobile terminal, and more particularly, to a mobile terminal having an antenna portion for transmitting and receiving a radio signal.

### 2. Background of the Invention

In general, a terminal may be classified into a mobile (portable) terminal and a stationary terminal according to a moveable state. The mobile terminal may be also classified into a handheld terminal and a vehicle mount terminal.

The terminal support many complicated functions such as capturing images or video, reproducing music or video files, playing games, receiving broadcast signals, and the like. Thus, the mobile terminal now functions as a multimedia player or a device.

Various attempts have been made to implement complicated functions in such a multimedia device using hardware or software. For instance, the mobile terminal includes a User Interface (UI) environment allowing a user to easily and conveniently search for or select a desired function. The mobile terminal has also become a necessity for many users and thus the efficient design and appearance of the mobile terminal is desired by the user.

US 2010/0085268 A1 relates to an antenna having a number of operating frequencies and including a feed element aground element and a number of conductive antenna tracks. A conductive antenna track extends outward from the feed element and returns back to the ground element. The areas defined by two antenna tracks may not overlap. According to another embodiment, three conductive antenna tracks correspond to three resonant frequencies, respectively.

EP 1 555 715 A1 relates to an antenna device, where a half wavelength dipole antenna is folded so as to form a forward path section, a folding section and a backward path section, such that the backward path section is connected at a ground terminal, and an electric power is supplied at a branching point. An additional antenna is folded similarly and connected to the monopole antenna such that the branching point and the electric power are shared. The distance between the forward and backward path lines is sufficiently small compared with the wavelength such that the transmission lines similarly constitute the folding monopole antenna.

### SUMMARY OF THE INVENTION

Accordingly, one object of the present invention is to address the above-noted and other problems with the related art.

Another object is to provide a mobile terminal having an antenna device with an enhanced function that can transmit and receive a multi radio signal of a high frequency and a low frequency.

To achieve these and other advantages and in accordance with the purpose of this specification, as embodied and broadly described herein, the present invention provides a mobile terminal including a terminal body having a ground; a first conductive member and a second conductive member mounted in the terminal body, and spaced from each other and configured to transmit and receive a radio signal; a feed connection portion connected to the first conductive member and configured to feed-connect the first conductive member to the ground; and a first ground connection portion connected to the second conductive member and configured to ground-connect the second conductive member to the ground. Further, the first conductive member and the second conductive member are connected to each other so as to form a loop.

In another aspect, the present invention provides a mobile terminal including a terminal body having a ground; first and second conductive members mounted in the terminal body, spaced from each other in a predetermined interval and disposed in parallel so as to form at least one slot, and connected to each other so as to form a loop; a feed connection portion connected to the first conductive member and configured to feed-connect the ground to the first conductive member; and one or more ground connection portions configured to ground-connect the ground to the second conductive member so that paths formed from the feed-connection portion via the respective first and second conductive members have different resonant lengths for transmitting and receiving radio signals at different frequency bands.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG 1 is a front perspective view of a mobile terminal according to one embodiment of the present invention;
FIG. 2 is a rear perspective view of the mobile terminal of FIG 1;
FIG 3 is a disassembled perspective view of the mobile terminal of FIG. 1;
FIG. 4 is a rear perspective view of the mobile terminal of FIG 2, which shows a rear case removed from the mobile terminal;
FIGS. 5A and 5B are conceptual views showing examples of an antenna device according to the present invention;
FIG 6A is a conceptual view of an antenna device according to a comparative example of the present invention;
FIGS. 6B and 6C are graphs showing shifts of central frequencies due to tuning;
FIG 7A is a conceptual view of an antenna device according to one example of the present invention;
FIGS. 7B to 7D are graphs showing shifts of central frequencies due to tuning; and
FIGS. 8A to 8E are conceptual views of antenna devices according to modified examples of the present invention, wherein figure 8B shows the second ground connection according to claim 1.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

The mobile terminal according to an embodiment of the present invention includes a portable phone, a smart phone, a laptop computer, a digital broadcasting terminal, Personal Digital Assistants (PDA), Portable Multimedia Player (PMP), a navigation system, etc., and a fixed terminal such as a digital TV, a desktop computer, etc.

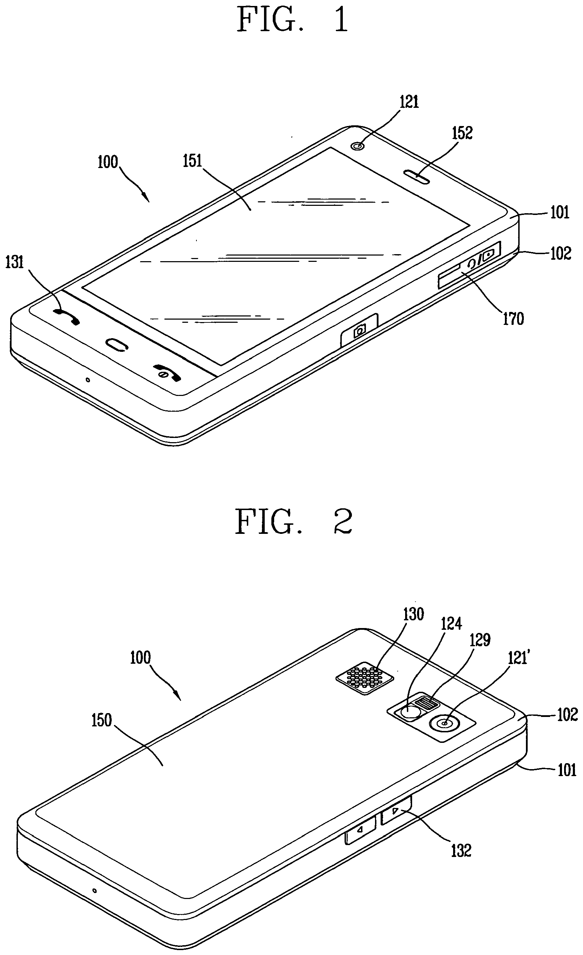

FIG 1 is a block diagram of a mobile terminal 100 according to one embodiment of the present invention. The mobile terminal 100 may be a bar-type mobile terminal including one body. However, the present invention is not limited to this. That is, the present invention is also applicable to various structures such as a slide type where at least two bodies are coupled to each other so as to perform a relative motion, a folder type, a swing type, a swivel type, etc.

As shown in FIG. 1, a case (casing, housing, cover, etc.) forming an outer appearance of a body includes a front case 101 and a rear case 102. A space formed by the front case 101 and the rear case 102 accommodates various components therein. At least one intermediate case may further be disposed between the front case 101 and the rear case 102. Such cases may be formed by injection-molded synthetic resin, or may be formed using a metallic material such as stainless steel (STS) or titanium (Ti).

In addition, the front case 101 includes a display unit 151, an audio output unit 152, a camera 121, user input units 131 and 132, a microphone 122, an interface unit 170, etc. As shown, in this embodiment, the display unit 151 occupies most a main surface of the front case 101. Further, the audio output unit 152 and the camera 121 are arranged at a region adjacent to one end of the display unit 151, and the user input unit 131 and the microphone 122 are arranged at a region adjacent to another end of the display unit 151. The user input unit 132, the interface unit 170, etc. may be arranged on side surfaces of the front case 101 and the rear case 102.

In addition, the display unit 151 displays information processed in the mobile terminal 100. For example, when the mobile terminal 100 is in a phone call mode, the display unit 151 may display a User Interface (UI) or a Graphic User Interface (GUI) associated with a call or other communication (such as text messaging, multimedia file downloading, etc.). When the mobile terminal 100 is in a video call mode or image capturing mode, the display unit 151 may display a captured image and/or received image, a UI or GUI that shows videos or images and functions related thereto, and the like.

The display unit 151 may include at least one of a Liquid Crystal Display (LCD), a Thin Film Transistor-LCD (TFT-LCD), an Organic Light Emitting Diode (OLED) display, a flexible display, a three-dimensional (3D) display, or the like. Some of these displays may be configured to be transparent so that outside may be seen therethrough, which may be referred to as a transparent display. A representative example of the transparent display may include a Transparent Organic Light Emitting Diode (TOLED), and the like. The rear surface portion of the display unit 151 may also be implemented to be optically transparent. Under this configuration, a user can view an object positioned at a rear side of a body through a region occupied by the display unit 151 of the body.

Further, the display unit 151 may be implemented in two or more in number according to a configured aspect of the mobile terminal 100. For instance, a plurality of displays may be arranged on one surface integrally or separately, or may be arranged on different surfaces.

Also, if the display unit 151 and a touch sensitive sensor (referred to as a touch sensor) have a layered structure therebetween, the structure can be referred to as a touch screen. The display unit 151 may also be used as an input device rather than an output device, and the touch sensor may be implemented as a touch film, a touch sheet, a touch pad, and the like.

Further, the interface unit 170 is generally implemented to interface the mobile terminal 100 with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The touch sensor may be configured to convert changes of a pressure applied to a specific part of the display unit 151, or a capacitance occurring from a specific part of the display unit 151, into electric input signals. Also, the touch sensor may be configured to sense not only a touched position and a touched area, but also a touch pressure.

When touch inputs are sensed by the touch sensors, corresponding signals are transmitted to a touch controller. The touch controller processes the received signals, and then transmits corresponding data to the controller 180. Accordingly, the controller 180 can sense which region of the display unit 151 has been touched.

In addition, the user input unit is manipulated to receive a command for controlling the operation of the mobile terminal 100, and in FIG. 1 includes a plurality of manipulation units 131 and 132. The manipulation units 131 and 132 may be referred to as manipulating portions, and may include any type of ones that can be manipulated in a user's tactile manner. Also, commands input through the first or second user input units 131 and 132 may be variously set. For instance, the first manipulation unit 131 is configured to input commands such as START, END, SCROLL or the like, and the second manipulation unit 132 is configured to input commands for controlling a level of sound output from the audio output unit 152, or commands for converting the current mode of the display unit 151 to a touch recognition mode.

Next, FIG 2 is a rear perspective view of the mobile terminal 100 of FIG. 1. Referring to FIG 2, a camera 121' is additionally provided on the rear case 102. The camera 121' faces a direction which is opposite to a direction faced by the camera 121, and may have different pixels from those of the camera 121.

In addition, the camera 121 may operate with relatively lower pixels (lower resolution). Thus, the camera 121 may be useful when a user can capture his face and send it to another party during a video call or the like. On the other hand, the camera 121' may operate with a relatively higher pixels (higher resolution) such that it can be useful for a user to obtain higher quality pictures for later use. The cameras 121 and 121' may be installed at a terminal body so as to rotate or pop-up.

A flash 123 and a mirror 124 are additionally disposed adjacent to the camera 121'. The flash 123 operates in conjunction with the camera 121' when taking a picture using the camera 121', and the mirror 124 can cooperate with the camera 121' to allow a user to photograph himself or herself in a self-portrait mode.

An audio output unit 130 may be additionally arranged on a rear surface of the terminal body and cooperate with the audio output unit 152 disposed on a front surface of the terminal body so as to implement a stereo function. Also, the audio output unit 130 may be configured to operate as a speakerphone.

A broadcast signal receiving antenna as well as an antenna for calling may also be disposed on a side surface of the terminal body. The broadcast signal receiving antenna which constitutes a part of a broadcasting receiving module may be configured to retract into the terminal body.

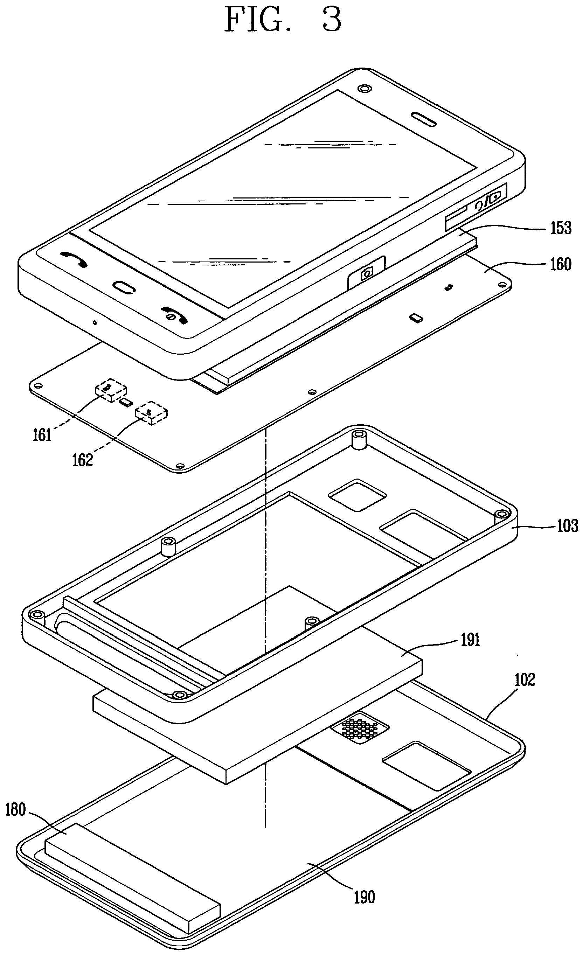

In addition, a power supply unit 150 for supplying power to the mobile terminal 100 is mounted to the terminal body. The power supply unit may be mounted in the terminal body, or may be configured to be detachable from the outside of the terminal body. The power supply unit 150 may be mounted to the mobile terminal 100 by a battery cover 190 (see FIG 3).

A touch pad for detecting touch may be additionally mounted to the rear case 102. The touch pad may be also configured to be transmissive like the display unit 151. When the display unit 151 is configured to output visual information from two surfaces, the visual information may be recognized even through the touch pad. The visual information output from the two surfaces of the display unit 151 may be controlled by the touch pad. A display may be additionally mounted to the touch pad, and a touch screen may be arranged at the rear case 102.

The touch pad interworks with the display unit 151 of the front case 101. The touch pad may be arranged at a rear side of the display unit 151 in parallel, and may have a size equal to or smaller than that of the display unit 151.

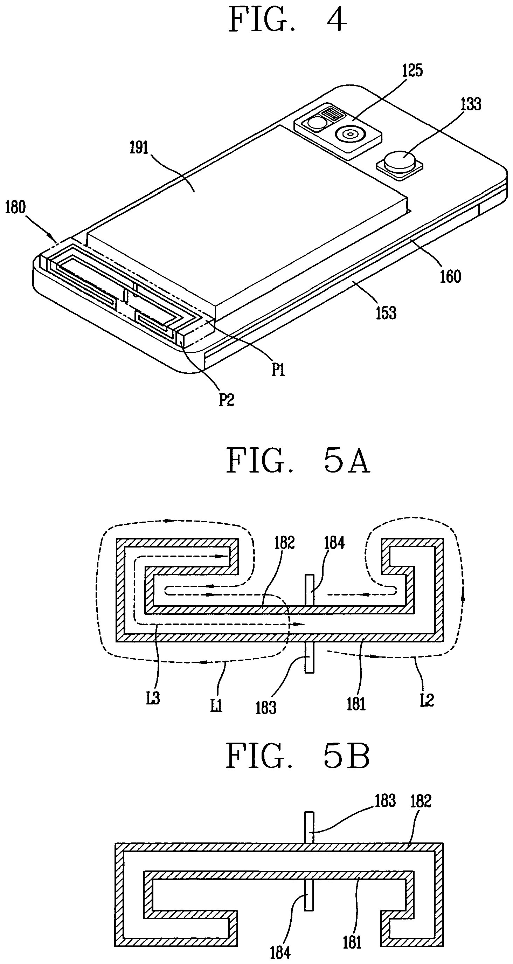

FIG 3 is a disassembled perspective view of the mobile terminal of FIG. 1, and FIG 4 is a rear perspective view of the mobile terminal of FIG. 2, which shows the rear case 102 removed from the mobile terminal. As shown in FIG 3, the mobile terminal 100 according to one embodiment of the present invention includes an antenna device 180 which operates in a folded dipole manner. A display module 153 is mounted to one surface of the first case 101, and a printed circuit board 160 is disposed to cover the display module 153.

Each type of electronic device may be mounted on one surface of the PCB 160, and a shield member for protecting the electronic devices may be mounted to the one surface. The shield member may be electrically connected to the PCB 160 for extension of a ground of the PCB 160.

The PCB 160 may also be implemented as an example of a controller for operating each function of the mobile terminal 100. The PCB 160 may be formed in plurality, and may serve as a controller through combination thereof. In addition, the PCB 160 is electrically connected to the antenna device 180, and is configured to process a radio signal (or radio electromagnetic wave) transmitted or received by the antenna device 180. For processing of a radio signal, a plurality of transceiver circuits 161 and 162, for example, may be formed at the PCB 160.

The transceiver circuits 161 and 162 may include one or more integrated circuits, and relevant electric devices. For instance, the transceiver circuits may include a transmission integrated circuit, a reception integrated circuit, a switching circuit, an amplifier, etc. The plurality of transceiver circuits 161 and 162 may simultaneously operate by simultaneously feeding conductive members included in radiators. For instance, while one performs transmission, another can perform reception. Alternatively, both transceiver circuits can perform transmission or reception.

As an example of the power supply unit, a battery 191 is disposed inside the mobile terminal. The battery 191 is accommodated in a mounting member formed of a metallic material and having a mounting space. The mounting member may be electrically connected to the PCB 160, and may be configured to extend a ground of the PCB 160. Furthermore, the mounting member, the shield member, and a ground layer of the PCB 160 may be electrically connected to each other, thereby forming a ground of the mobile terminal.

The antenna device 180 may be implemented as part thereof and be thermally melted or compressed to a case of the terminal body, a battery cover, or a carrier. Alternatively, part of the antenna device 180 may be printed on the case of the terminal body, the battery cover or the carrier. Still alternatively, part of the antenna device 180 may be attached onto the case of the terminal body, the battery cover or the carrier in the form of a film. Here, the compression indicates that a conductive metallic plate to serve as a radiator is mounted to a plastic carrier of a predetermined shape in a pressed manner.

Next, FIG. 4 shows conductors are printed on a carrier. Further, the antenna device 180 according to one embodiment of the present invention may be formed in plurality near an upper end or a lower end of the terminal body. Alternatively, the antenna device 180 may be formed near a side end of the terminal body.

The antenna device 180 is an antenna configured to transmit and receive radio signals corresponding to at least one of a personal communication system (PCS), an advanced wireless service (AWS), a digital communications network (DCN) and a long term evolution (LTE). Alternatively, the antenna device 180 may be one of a broadcast signal receiving antenna which operates in an FM radio frequency band or a Bluetooth band or a WIFI band, a Bluetooth antenna, a satellite signal receiving antenna, and a wireless Internet data receiving antenna. The antenna device 180 according to one embodiment of the present invention may be a smart MIMO (multi input multi out) antenna system, which may be considered as 'hybrid antenna' since the antenna systems operate in different bands and have different forms.

Next, FIGS. 5A and 5B are conceptual views showing examples of an antenna device according to the present invention. As shown, the antenna device 180 includes a plurality of conductive members, more specifically, a first conductive member 181 and a second conductive member 182 which are disposed in parallel. A feed connection portion 183 or a ground connection portion 184 is connected to one of the two conductive members, and the ground connection portion 184 or the feed connection portion 183 is connected to another of the two conductive members. The members are connected to each other at one point, thereby forming a loop.

Under the configuration that the feed connection portion 183 and the ground connection portion 184 are coupled to the conductive members facing each other, the antenna device 180 serves as a loop antenna having different resonant lengths according to rotation directions. Here, the resonant length indicates a physical length of an antenna for transmitting and receiving a radio signal at a specific frequency band.

Referring to FIG. 5A, the antenna device 180 according to one example of the present invention is formed to have a resonant length (L1) in a clockwise direction from the feed connection portion 183 to the first ground connection portion 184 via the first conductive member 181 and the second conductive member 182, and is formed to have a resonant length (L2) in a counterclockwise direction from the feed connection portion 183 to the first ground connection portion 184 via the first conductive member 181 and the second conductive member 182. In addition, a slot antenna having a third resonant length may be defined by a gap between the first conductive member 181 and the second conductive member 182, and may have a length (L3) from one connection point between the first conductive member 181 and the second conductive member 182 to the first ground connection portion 184.

A first resonant length, a second resonant length and a third resonant length correspond to a half wavelength (λ/2) of a central frequency. Accordingly, the radiation resistance is enhanced, and a 'Q' value of an antenna is lowered. As a result, the antenna device 180 according to one example of the present invention has a higher radiation efficiency and a wider band than a PIFA antenna or an antenna having a monopole structure.

Generally, a radio function of an antenna device is influenced by an electric device. In addition, in the related art, an antenna device is installed in a free space inside a mobile terminal at a position spaced from a display panel by a predetermined distance. However, the antenna device 180 according to one example of the present invention is disposed to cover part of the display module 153, as shown in FIG. 4, due to an enhanced antenna characteristic.

Under this configuration, no free space for mounting the antenna device 180 is required between the antenna device 180 and the display module 153, or between the antenna and the terminal case. This advantage miniaturizes the entire size of the mobile terminal. The antenna device 180 according to one example of the present invention may also be disposed to cover part of the display module 153 and be disposed near one end of the
terminal case.

Referring to FIG 5B, the antenna device 180 according to another example of the present invention may be designed to transmit and receive radio signals at different frequency bands by changing the positions of the feed connection portion 183 and the ground connection portion 184. Referring to FIGS. 4 and 5A, the first conductive member 181 and the second conductive member 182 are spaced from each other, and are disposed in parallel. In addition, the first conductive member 181 and the second conductive member 182 are bent from extended points, and extend from the bent positions in parallel toward one direction.

As shown in FIG. 4, the first conductive member 181 and the second conductive member 182 extend in parallel from a first plane (P1), and are bent from one or more points. In addition, the first conductive member 181 and the second conductive member 182 extend from the bent positions in parallel toward one direction. Here, the first conductive member 181 and the second conductive member 182 which extend from the bent positions may be disposed on a second position (P2) crossing the first plane (P1). The first plane (P1) may be one surface of upper and lower surfaces of the terminal body, and the second plane (P2) may be one surface of side surfaces of the terminal body.

The first.conductive member 181 or the second conductive member 182 may have a meander structure in which the first conductive member 181 or the second conductive member 182 is implemented in the form of a curved conductor so as to have a predetermined length corresponding to a specific frequency.

One of the first conductive member 181 and the second conductive member 182 may also be ground-connected to a PCB 160 having a ground by the ground connection portion 184. The ground connection portion 184 is ground-connected to one of the first conductive member 181 and the second conductive member 182 to electrically short the one, thereby performing impedance matching with respect to a resonance frequency.

The ground connection portion 184 is configured to ground the first conductive member 181 or the second conductive member 182, by electrically connecting an electric ground to one end of the first conductive member 181 or the second conductive member 182. Here, the electric ground may be a ground of the PCB 160.

The ground connection portion 184 may be provided with two or more paths having different lengths, and may be provided with switches corresponding to the respective paths. Here, each path connects an electric ground to one of radiators (e.g., first member) in a different length, through a corresponding switch provided thereat. The path indicates an electric passage which connects an electric ground to a radiator, and may include a ground plate, a ground clip and a ground line. The path may have a different length by having a ground line of a different length.

The PCB 160 is feed-connected to one of the first conductive member 181 and the second conductive member 182 by the feed connection portion 183. The feed connection portion 183 is configured to feed one of the first conductive member 181 and the second conductive member 182, in an electric connection manner (or electro-magnetic (EM) feeding manner). The feed connection portion 183 electrically connects a feeding device to one of the first conductive member 181 and the second conductive member 182.

For this connection, the feed connection portion 183 may include a ground plate, a ground clip and a ground line. The ground plate, the ground clip and the ground line are connected to each other, and transmits a current (or voltage) fed through a feeding device to a conductor of a radiator. Here, the ground line may include a microstrip printed on the PCB.

The first conductive member 181 or the second conductive member 182 is partially or entirely formed as a conductor, and operates as a radiator. The first conductive member 181 or the second conductive member 182 may be formed in various manners according to a resonance characteristic or a frequency characteristic. Further, a current is fed to the conductor through the feed connection portion 183, and the fed current is shorted through the ground connection portion 184. Thus, the antenna device 180 includes independent tuning and has an optimized design in an easy manner.

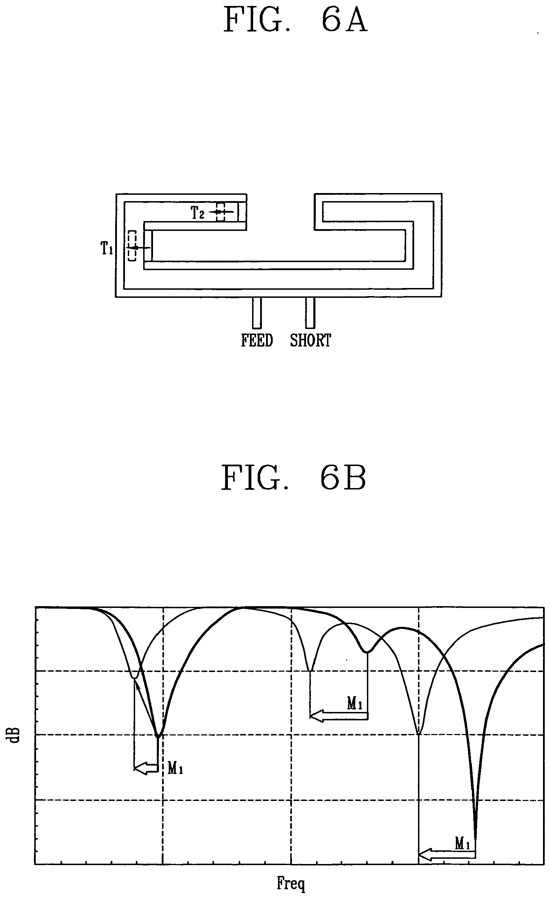

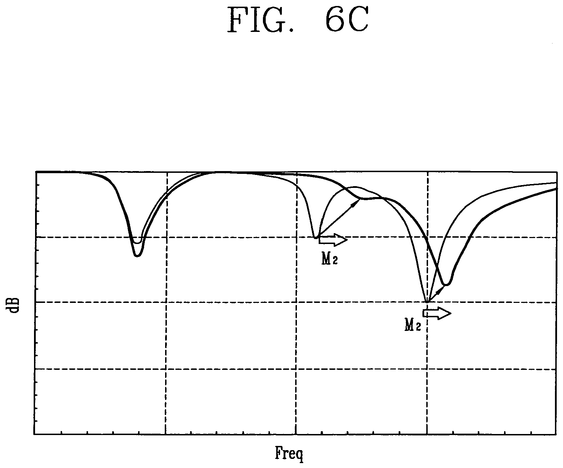

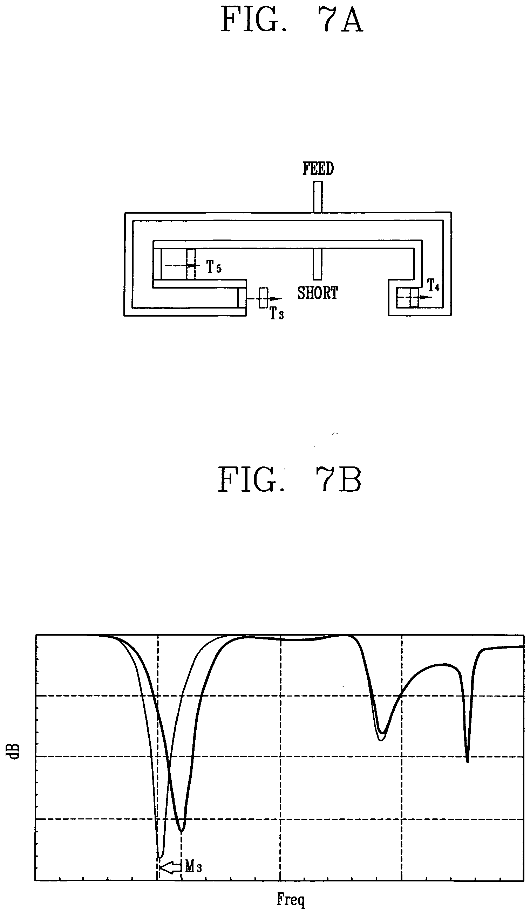

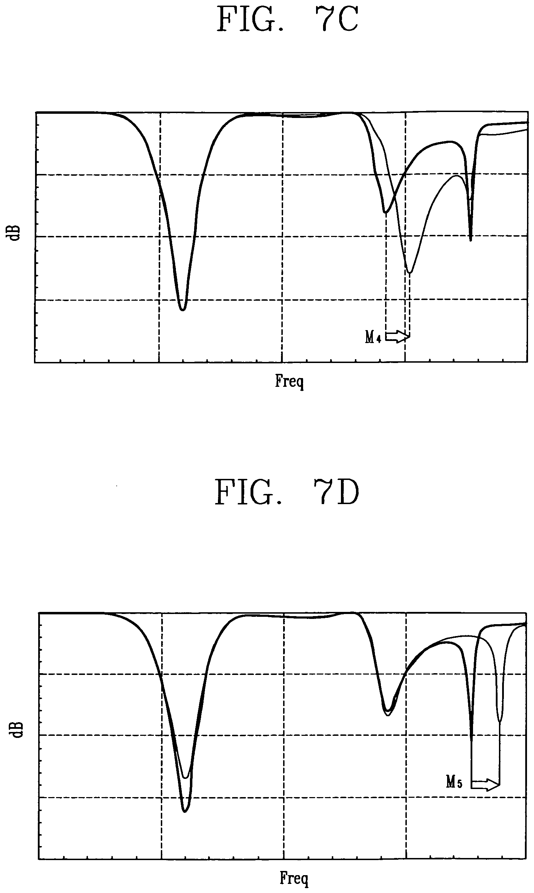

Next, FIG 6A is a conceptual view of an antenna device 180 according to a comparative example of the present invention, FIGS. 6B and 6C are graphs showing shifts of central frequencies due to tuning, FIG. 7A is a conceptual view of the antenna device 180 according to one example of the present invention, and FIGS. 7B to 7D are graphs showing shifts of central frequencies due to tuning.

In particular, FIG. 6A is a view showing that a resonant length is adjusted by changing a connection point between the first conductive member 181 and the second conductive member 182. Referring to FIGS. 6A and 6B, once the resonant length is adjusted (T1), a central frequency is shifted (M1) at all frequency bands. Referring to FIGS. 6A and 6C, once the resonant length is adjusted (T2), a central frequency is shifted (M2) at all frequency bands.

For instance, for a multi-band antenna configured to transmit and receive radio signals in all frequency bands of GSM (global system for mobile communication) 850, PCS and WCDMA (wideband CDMA) (2.4GHz), the multi-band antenna may not function at a specific band. In this instance, once a resonant length of the multi-band antenna is adjusted for tuning, an antenna function may be lowered at a specific band.

Also, for a folded dipole antenna, a central frequency is shifted in all frequency bands due to control of a resonant length at a specific part. This causes a difficulty in a frequency design. In order to solve this problem, in the present invention, the feed connection portion 183 and the ground connection portion 184 are coupled to the conductive members 181 and 182 facing each other. In this instance, resonant lengths of other central frequencies rather than a corresponding central frequency do not change at the time of turning. This facilitates an antenna design.

Referring to FIGS. 7A to 7D, when the respective resonant lengths are adjusted (T3, T4 and T5), central frequencies at other frequency bands are not shifted, but only a central frequency at a corresponding frequency band is shifted (M3, M4 and M5).

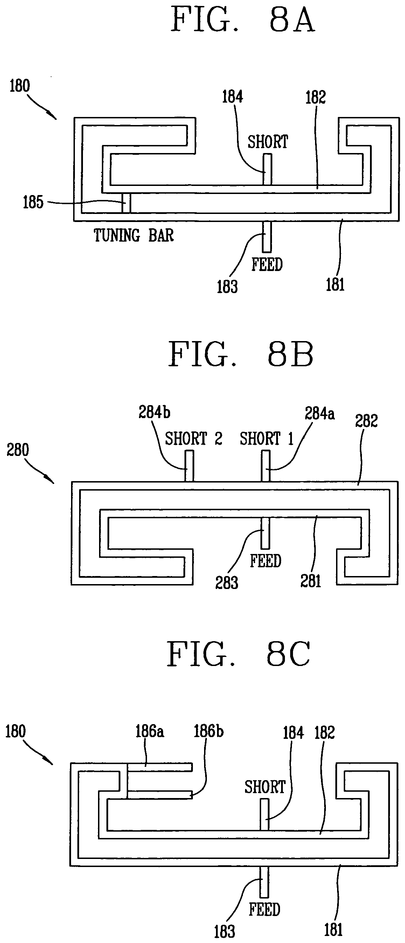

Next, FIGS. 8A to 8E are conceptual views of antenna devices 180, 280 and 380 according to modified examples of the present invention. Referring to FIG. 8A, a feed connection portion 183 is connected to a first conductive member 181, and a ground connection portion 184 is connected to a second conductive member 182. The first conductive member 181 and the second conductive member 182 are spaced from each other, and are disposed in parallel. Also, the first conductive member 181 and the second conductive member 182 are bent from extended points, and extend from the bent positions in parallel toward one direction.

A tuning bar 185 configured to connect the first conductive member 181 and the second conductive member 182 to each other is also formed at one point on a path implemented in a clockwise direction from the feed connection portion 183 to the ground connection portion 184 via the first conductive member 181. The tuning bar 185 changes a maximum impedance value of a loop by changing the impedance of the first conductive member 181 and the impedance of the second conductive member 182 and the impedances implemented near connection points between the first and second conductive members.

Referring to FIG. 8B, a feed connection portion 283 is connected to a first conductive member 281, and a first ground connection portion 284a is connected to a second conductive member 282. FIG 8B is differentiated from FIG. 8A in that the second conductive member 282 is formed to encompass the first conductive member 281, and a second ground connection portion 284b is added to the second conductive member 282.

Under this configuration, a second resonant length is formed. Here, the second resonant length means a path formed in a counterclockwise direction from the feed connection portion 283 to the first ground connection portion 284a via the first conductive member 281. In addition, the second ground connection portion 284b may be formed at a point on a path implemented in a clockwise direction from the feed connection portion 283 to the first ground connection portion 284a via the first conductive member 281, thereby controlling the first resonant length.

A slot antenna having a third resonant length may also be defined by a gap between the first conductive member 281 and the second conductive member 283, and has a length from one connection point between the first and second conducive members to the first ground connection portion 284a. In this instance, the third resonant length may be variable due to the second ground connection portion 284b.

Referring to FIG. 8C, a feed connection portion 183 is connected to a first conductive member 181, and a ground connection portion 184 is connected to a second conductive member 182. Also, sub-conductive members 186a and 186b extend from a path formed in a clockwise direction from the feed connection portion 183 to the ground connection portion 184 via the first conductive member 181 and the second conductive member 182. Due to the length of the sub-conductive members 186a and 186b, the entire length of the path is extended and the first resonant length can be adjusted. Here, an area of an antenna radiator is increased by an adjusted length, resulting in enhancing a bandwidth. The sub-conductive members 186a and 186b may be implemented to have a meander structure or a planner patch form.

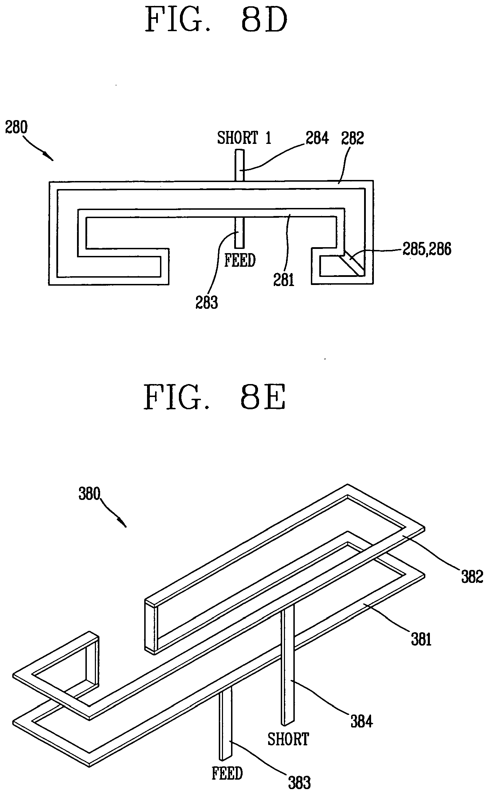

Referring to FIG 8D, a feed connection portion 283 is connected to a first conductive member 281, and a ground connection portion 284 is connected to a second conductive member 282. A sub-conductive member 286 or a tuning bar 285 may be formed on a path implemented in a counterclockwise direction from the feed connection portion 283 to the ground connection portion 284 via the first conductive member 281 and the second conductive member 282. The sub-conductive member 286 or the tuning bar 285 changes an antenna characteristic by controlling a second resonant length.

Referring to FIG 8E, a first conductive member 383 and a second conductive member 382 are formed on different planes spaced from each other, and are connected to each other at one point. A feed connection portion 383 is connected to the first conductive member 383, and a ground connection portion 384 is connected to the second conductive member 382. In the same manner as in the aforementioned examples and embodiments, connection points between the conductive members are variable to enable tuning at a desired frequency band. Furthermore, in the antenna device of FIG. 8E, the first conductive member 383 and the second conductive member 382 are spaced from each other in a Z-direction in space, not in X and Y directions on the same plane. In this instance, an area occupied by the conductive members 383 and 382 on one plane is deceased. As a result, the entire size of the antenna can be miniaturized.

The first conductive member 383 and the second conductive member 382 may also be formed in a carrier to have a double structure, or may be respectively formed on an upper and lower surfaces of the carrier. Alternatively, the first conductive member 383 and the second conductive member 382 may be formed at different cases, and may be connected to each other.

Thus, the present invention may have the following advantages. First, the feed connection portion and the ground connection portion are respectively coupled to conductive members facing each other. This implements a loop antenna having different resonant lengths according to rotation directions. As a result, the antenna device can be tuned in an independent manner, and have an optimum design.

Secondly, a first resonant length, a second resonant length and a third resonant length correspond to a half wavelength (λ/2) of a central frequency. Accordingly, the radiation resistance is enhanced, and a 'Q' value of an antenna is lowered. As a result, no free space for mounting the antenna device is required between the antenna device and a display panel, or between an antenna and a terminal case. This miniaturizes the entire size of the mobile terminal.

The foregoing examples and embodiments and advantages are merely exemplary and are not to be construed as limiting the present invention. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the examples and embodiments described herein may be combined in various ways to obtain additional and/or alternative exemplary embodiments.

As the present features may be embodied in several forms without departing from the characteristics thereof, it should also be understood that the above-described examples and embodiments are not limited by any of the details of the foregoing description, unless otherwise specified, but rather should be construed broadly within its scope as defined in the appended claims.

## Claims

1. A mobile terminal, comprising:
a terminal body having a ground;
a first conductive member (181, 281, 381) and a second conductive member (182, 282, 382) mounted in the terminal body, and spaced from each other and configured to transmit and receive a radio signal wherein the first conductive member (181, 281, 381) and the second conductive member (182, 282, 382) are connected to each other to form a loop antenna;
a feed connection portion (183, 283, 383) connected to the first conductive member (181, 281, 381) and configured to feed-connect the first conductive member (181, 281, 381); and
a first ground connection portion (184, 284a, 384) connected to the second conductive member (182, 282, 382) and configured to ground-connect the second conductive member (182, 282, 382) to the ground,
wherein a path implemented in a first rotation direction from the feed connection portion to the first ground connection portion via the connected first and second conductive members includes a first resonant length for transmitting and receiving the radio signal at a first frequency band,
wherein a path implemented in a second rotation direction from the feed connection portion to the first ground connection portion via the connected first and second conductive members includes a second resonant length for transmitting and receiving the radio signal at a second frequency band,
**characterized in that**
the mobile terminal further comprises:
a second ground connection portion (284b) configured to ground-connect the second conductive member to the ground, wherein the length of one of the paths implemented in the first rotation direction and the second rotation direction can end at the second ground connection portion (284b).

2. The mobile terminal of claim 1, wherein a slot antenna is defined by a gap between the first and second conductive members, and has a length from one connection point between the first and second conductive members to the first ground connection portion, and
wherein the slot antenna includes a third resonant length for transmitting and receiving the radio signal at a third frequency band.

3. The mobile terminal of claim 1, wherein the first and second conductive members are disposed in parallel on a first plane, are bent from one or more points, and extend from the one or more points in parallel toward one direction.

4. The mobile terminal of claim 3, wherein the first and second conductive members extend from the bent positions are disposed on a second plane crossing the first plane.

5. The mobile terminal of claim 4, wherein the first plane is one surface of upper and lower surfaces of the terminal body, and the second plane is one side surface of the terminal body.

6. The mobile terminal of claim of any one of claims 1 to 5, further comprising:
a carrier mounted to the terminal body at one end of the terminal body, said first and second conductive members being disposed on one surface of the carrier.

7. The mobile terminal of claim 6, further comprising:
a display panel configured to display visual information; and
a printed circuit board having the display panel on one surface thereof and configured to process the radio signal,
wherein the carrier is disposed on another surface of the printed circuit board.

8. The mobile terminal of claim 1, further comprising:
a tuning bar configured to connect the first and second conductive members to each other so as to control the first or second resonant length.

9. The mobile terminal of claim of any one of claims 1 to 8, wherein the first conductive member is disposed on a first plane, and the second conductive member is disposed on a second plane spaced from the first plane by a predetermined gap, the second plane covering the first plane.

## Patentansprüche

1. Mobiles Endgerät umfassend:
einen Endgerätekörper, der eine Erdung aufweist;
ein erstes leitendes Bauteil (181, 281, 381) und ein zweites leitendes Bauteil (182, 282, 382), die in dem Endgerätekörper eingebaut sind und die voneinander beabstandet sind und dazu eingerichtet sind, ein Funksignal zu übertragen und zu empfangen, wobei das erste leitende Bauteil (181, 281, 381) und das zweite leitende Bauteil (182, 282, 382) miteinander verbunden sind, um eine Rahmenantenne zu bilden;
ein Zuleitungsverbindungsteil (183, 283, 383), das mit dem ersten leitenden Bauteil (181, 281, 381) verbunden ist und das dazu eingerichtet ist, das erste leitende Bauteil (181, 281, 381) mit einer Zuleitung zu verbinden ("feed-connect"); und
ein erstes Erdungsverbindungsteil (184, 284a, 384), das mit dem zweiten leitenden Bauteil (182, 282, 382) verbunden ist und das dazu eingerichtet ist, das zweite leitende Bauteil (182, 282, 382) mit der Erdung zu verbinden ("ground-connect"),
wobei ein Pfad, der in einer ersten Drehrichtung von dem Zuleitungsverbindungsteil zu dem ersten Erdungsverbindungsteil über die verbundenen ersten und zweiten leitenden Bauteile implementiert ist, eine erste Resonanzlänge zum Übertragen und Empfangen von Funksignalen eines ersten Frequenzbands umfasst,
wobei ein Pfad, der in einer zweiten Drehrichtung von dem Zuleitungsverbindungsteil zu dem ersten Erdungsverbindungsteil über die verbundenen ersten und zweiten leitenden Bauteile implementiert ist, eine zweite Resonanzlänge zum Übertragen und Empfangen von Funksignalen eines zweiten Frequenzbands umfasst,
**dadurch gekennzeichnet, dass** das mobile Endgerät des Weiteren umfasst:
ein zweites Erdungsverbindungsteil (284b), das dazu eingerichtet ist, das zweite leitende Bauteil mit der Erdung zu verbinden, wobei die Länge eines der Pfade, die in der ersten Drehrichtung und der zweiten Drehrichtung implementiert sind, an dem zweiten Erdungsverbindungsteil (284b) enden kann.

2. Mobiles Endgerät gemäß Anspruch 1, wobei eine Schlitzantenne durch eine Lücke zwischen den ersten und zweiten leitenden Bauteilen definiert ist, und eine Länge von einem Verbindungspunkt zwischen den ersten und zweiten leitenden Bauteilen zu dem ersten Erdungsverbindungsteil aufweist, und
wobei die Schlitzantenne eine dritte Resonanzlänge zum Übertragen und Empfangen von Funksignalen eines dritten Frequenzbands umfasst.

3. Mobiles Endgerät gemäß Anspruch 1, wobei die ersten und zweiten leitenden Bauteile in einer ersten Ebene parallel angeordnet sind, an einem oder mehreren Punkten gebogen sind, und sich von dem einen oder den mehreren Punkten in eine Richtung parallel erstrecken.

4. Mobiles Endgerät gemäß Anspruch 3, wobei sich die ersten und zweiten leitenden Bauteile, die sich von den gebogenen Positionen erstrecken, in einer zweiten Ebene, die die erste Ebene kreuzt, angeordnet sind.

5. Mobiles Endgerät gemäß Anspruch 4, wobei die erste Ebene eine Fläche von einer oberen und unteren Fläche des Endgerätkörpers ist, und die zweite Fläche eine Seitenfläche des Endgerätkörpers ist.

6. Mobiles Endgerät gemäß einem der Ansprüche 1 bis 5, des Weiteren umfassend:
einen Träger, der an einem Ende des Endgerätkörpers an dem Endgerätkörper befestigt ist, wobei die ersten und zweiten leitenden Bauteile auf einer Fläche des Trägers angeordnet sind.

7. Mobiles Endgerät gemäß Anspruch 6, des Weiteren umfassend:
ein Anzeigeelement, das dazu eingerichtet ist, visuelle Informationen anzuzeigen; und
eine Leiterplatte, die auf einer Seite davon das Anzeigeelement aufweist und dazu eingerichtet ist, dass Funksignal zu verarbeiten,
wobei der Träger auf einer anderen Fläche der Leiterplatte angeordnet ist.

8. Mobiles Endgerät gemäß Anspruch 1, des Weiteren umfassend:
einen Tuningstab, der dazu eingerichtet ist, die ersten und zweiten leitenden Bauteile miteinander zu verbinden, um die erste oder zweite Resonanzlänge zu steuern.

9. Mobiles Endgerät gemäß einem der Ansprüche 1 bis 8, wobei das erste leitende Bauteil in einer ersten Ebene angeordnet ist, und das zweite leitende Bauteil in einer zweiten Ebene, die von der ersten Ebene durch eines vorgegebene Lücke beabstandet ist, angeordnet ist, wobei die zweite Ebene die erste Ebene abdeckt.

## Revendications

1. Terminal mobile comprenant :
un corps de terminal comportant une masse ;
un premier élément conducteur (181, 281, 381) et un deuxième élément conducteur (182, 282, 382) montés dans le corps de terminal, et espacés l'un de l'autre et configurés pour transmettre et recevoir un signal radio dans lequel le premier élément conducteur (181, 281, 381) et le deuxième élément conducteur (182, 282, 382) sont connectés l'un à l'autre pour former une antenne cadre ;
une partie de connexion d'alimentation (183, 283, 383) connectée au premier élément conducteur (181, 281, 381) et configurée pour connecter en alimentation le premier élément conducteur (181, 281, 381) ; et
une première partie de connexion à la masse (184, 284a, 384) connectée au deuxième élément conducteur (182, 282, 382) et configurée pour connecter le deuxième élément conducteur (182, 282, 382) à la masse,
dans lequel un trajet mis en oeuvre dans un premier sens de rotation depuis la partie de connexion d'alimentation vers la première partie de connexion à la masse via les premier et deuxième éléments conducteurs comprend une première longueur de résonance pour transmettre et recevoir le signal radio au niveau d'une première bande de fréquences,
dans lequel un trajet mis en oeuvre dans un deuxième sens de rotation depuis la partie de connexion d'alimentation vers la première partie de connexion à la masse via les premier et deuxième éléments conducteurs connectés comprend une deuxième longueur de résonance pour transmettre et recevoir le signal radio au niveau d'une deuxième bande de fréquences,
**caractérisé en ce que**
le terminal mobile comprend en outre :
une deuxième partie de connexion à la masse (284b) configurée pour connecter le deuxième élément conducteur à la masse, dans laquelle la longueur de l'un des trajets mis en oeuvre dans le premier sens de rotation et le deuxième sens de rotation peut se terminer au niveau de la deuxième partie de connexion à la masse (284b).

2. Terminal mobile selon la revendication 1, dans lequel une antenne à fente est définie par un espace entre les premier et deuxième éléments conducteurs, et présente une longueur allant d'un point de connexion entre les premier et deuxième éléments conducteurs à la première partie de connexion à la masse, et
dans lequel l'antenne à fente comprend une troisième longueur de résonance pour transmettre et recevoir le signal radio au niveau d'une troisième bande de fréquences.

3. Terminal mobile selon la revendication 1, dans lequel les premier et deuxième éléments conducteurs sont disposés en parallèle sur un premier plan, sont courbés à partir d'un ou de plusieurs points, et s'étendent depuis le ou les plusieurs points en parallèle vers une direction.

4. Terminal mobile selon la revendication 3, dans lequel les premier et deuxième éléments conducteurs s'étendant depuis les positions de courbure sont disposés sur un deuxième plan croisant le premier plan.

5. Terminal mobile selon la revendication 4, dans lequel le premier plan correspond à une surface parmi les surfaces supérieure et inférieure du corps de terminal, et le deuxième plan correspond à une surface latérale du corps de terminal.

6. Terminal mobile selon l'une quelconque des revendications 1 à 5, comprenant en outre :
un support monté sur le corps de terminal au niveau d'une extrémité du corps de terminal, lesdits premier et deuxième éléments conducteurs étant disposés sur une surface du support.

7. Terminal mobile selon la revendication 6, comprenant en outre :
un panneau d'affichage configuré pour afficher des informations visuelles ; et
une carte à circuit imprimé comportant le panneau d'affichage sur une surface de celle-ci et configurée pour traiter le signal radio,
dans lequel le support est disposé sur une autre surface de la carte à circuit imprimé.

8. Terminal mobile selon la revendication 1, comprenant en outre :
une barre de syntonisation configurée pour connecter les premier et deuxième éléments conducteurs l'un à l'autre de façon à commander la première ou la deuxième longueur de résonance.

9. Terminal mobile selon l'une quelconque des revendications 1 à 8, dans lequel le premier élément conducteur est disposé sur un premier plan, et le deuxième élément conducteur est disposé sur un deuxième plan espacé du premier plan d'un espace prédéterminé, le deuxième plan couvrant le premier plan.
